Europäisches Patentamt

European Patent Office

Office européen des brevets

(19)

(11) Veröffentlichungsnummer: **0 665 177 A1**

(12) **EUROPÄISCHE PATENTANMELDUNG**

(21) Anmeldenummer: **95100390.4**

(22) Anmeldetag: **13.01.95**

(51) Int. Cl.6: **B65G 53/52**, G01M 3/28

(30) Priorität: **27.01.94 DE 4402271**

(43) Veröffentlichungstag der Anmeldung:
**02.08.95 Patentblatt 95/31**

(84) Benannte Vertragsstaaten:
**AT BE CH DE DK ES FR GB GR IE IT LI LU MC NL PT SE**

(71) Anmelder: **ALB. Klein GmbH & Co. KG**
**Konrad-Adenauer-Strasse 200**
**D-57572 Niederfischbach (DE)**

(72) Erfinder: **Kramm, Andreas, Dipl.-Ing.**
**Metzer Strasse 63**
**D-58332 Schwelm (DE)**

(74) Vertreter: **Hiebsch, Gerhard F., Dipl.-Ing. et al**
**Hiebsch & Peege**
**Patentanwälte**
**Postfach 464**
**D-78204 Singen (DE)**

(54) **Vorrichtung und Verfahren zum Überwachen von doppelwandigen Förderrohren.**

(57) Bei einer Vorrichtung zum Überwachen von doppelwandigen Förderrohren eines Förderstranges in einem pneumatischen Fördersystem mittels wenigstens eines Detektorelementes, welches einen in einem zwischen der inneren und der äußeren Wandung des Förderrohres vorhandenen Zwischenraum entstehenden Überdruck aufnimmt und einer Auswerteinheit Signale zuführt, ist dem Zwischenraum (18) eines jeden der zum Förderstrang zusammengesetzten Förderrohre (10a bis $10_n$) ein Druckschalter (Q) mit Wechselkontakt zugeordnet und jedem dieser Druckschalter ein Widerstand ($R_1$ bis $R_n$) vorgeschaltet, wobei die Widerstände mit einem Abschlußwiderstand ($R_{ab}$) in Reihe liegen sowie mit den Druckschaltern Teile einer gemeinsamen zweiadrigen Drahtleitung (23,24) sind. Zudem sollen die Klemmen (21,22) der zweiadrigen Drahtleitung (23,24) als Meßpunkte an ein digitales Ohmmeter (20) angeschlossen sein.

Fig.1

EP 0 665 177 A1

Die Erfindung betrifft eine Vorrichtung und ein Verfahren zum Überwachen von doppelwandigen Förderrohren eines Förderstranges in einem pneumatischen Fördersystem mittels wenigstens eines Detektorelementes, welches in einem zwischen der inneren und der äußeren vorhandenen Wandung des Förderrohres vorhandenen Zwischenraum entstehenden Überdruck aufnimmt und einer Auswerteinheit Signale zuführt.

Bei pneumatischen Fördersystemen besteht wegen verschleißbedingter Wandungsschäden das Problem, daß das Fördergut unkontrolliert an sog. Durchbläsern entweichen kann. Diese Störungen konnten bisher nur nach einer Verschmutzung des Umfeldes durch das Fördergut festgestellt werden.

Für gefährliche Schüttgüter werden bei pneumatischen Förderanlagen Förderrohre doppelwandig ausgelegt; tritt infolge des erwähnten Verschleisses Fördergut aus dem die innere Wandung bildenden Innenrohr aus, entsteht in dem zwischen Innenrohr und Außenrohr verlaufenden Zwischenraum ein Überdruck, der üblicherweise mittels Drucksensoren überwacht wird. Zu deren Installation ist ein hoher Verkabelungs- und Auswertungsaufwand vonnöten; jeder der Drucksensoren muß mit einem gesonderten Kabel angeschlossen werden.

In Kenntnis dieses Standes der Technik hat sich der Erfinder das Ziel gesetzt, die Überwachung pneumatischer Förderanlagen zu verbessern und vor allem ein Frühwarmsystem für Rohrdurchbläser zu schaffen.

Zur Lösung dieser Aufgabe führen die Lehren der unabhängigen Patentansprüche; die Unteransprüche geben weiterführende Verbesserungen an.

Erfindungsgemäß ist dem -- bevorzugt ringförmigen --Zwischenraum eines jeden der zum Förderstrang zuammengesetzten Förderrohre ein Druckschalter mit Wechselkontakt zugeordnet und jedem dieser Druckschalter ein Widerstand vorgeschaltet; dabei liegen die Widerstände mit einem Abschlußwiderstand in Reihe und sind mit den Druckschaltern Teile einer gemeinsamen zweiadrigen Drahtleitung, deren Klemmen als Meßpunkte an ein digitales Ohmmeter angeschlossen sind.

Im Rahmen der Erfindung liegt es, daß im Zwischenraum eines jeden der Förderrohre der Druck durch einen gesonderten Druckschalter mit Wechselkontakt aufgenommen und durch ein mit dem Druckschalter in einer gemeinsamen zweiadrigen Drahtleitung liegendes digitales Ohmmeter ein Widerstandswert gemessen wird, der im Normalzustand des Fördersystems größer als der Meßbereich des Ohmmeters ist; bei Überdruck im Zwischenraum wird dessen Druckschalter betätigt sowie durch des Druckschalters Wechselkontakt ein vorgeschalteter Widerstand geschaltet. Zudem soll während des Schaltens des Widerstandes die Reihenschaltung der vor ihm liegenden Rohrwiderstände auf die Rückleitung der zweiadrigen Drahtleitung geschaltet werden.

Dank dieser Maßgaben wird das Problem des Verkabelungsaufwandes aller Sensoren gelöst und eine sehr einfache Auswertung aller Sensorsignale erreicht; alle Detektorelemente werden als Druckschalter mit Wechselkontakt ausgelegt. Jedem Druckschalter wird ein Widerstand von beispielsweise 1 kΩ vorgeschaltet, und der letzte Druckschalter erhält zusätzlich einen Abschlußwiderstand 220-facher Größe.

Im Normalzustand des Fördersystems liegen alle Widerstände, sowie der Abschlußwiderstand in Reihe, und das digitale Ohmmeter an den Klemmen der Zweidrahtleitung mißt einen Widerstandswert, der größer als sein Meßbereich ist. Die Anzeige meldet ein Überschreiten des Meßbereiches ohne konkreten Wert.

Im Falle eines Defektes im Förderrohr schaltet der Wechselkontakt seinen Widerstand und die Reihenschaltung der vor ihm liegenden Rohrleitungswiderstände auf die Rückleitung der Zweidrahtleitung. Nun wird -- wie gesagt --am Meßpunkt ein Widerstandwert angezeigt, welcher der laufenden Nummer des beschädigten Förderrohres entspricht.

Dank der Erfindung benötigt die Vorrichtung lediglich zwei Drahtleitungen parallel zur Förderleitung.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt jeweils in schematischer Wiedergabe in

Fig. 1:    einen aus mehreren Förderrohren zusammengesetzten Förderstrang mit zugeordnetem Überwachungssystem;

Fig. 2:    einen vergrößerten und teilweise geschnittenen Ausschnitt aus Fig. 1.

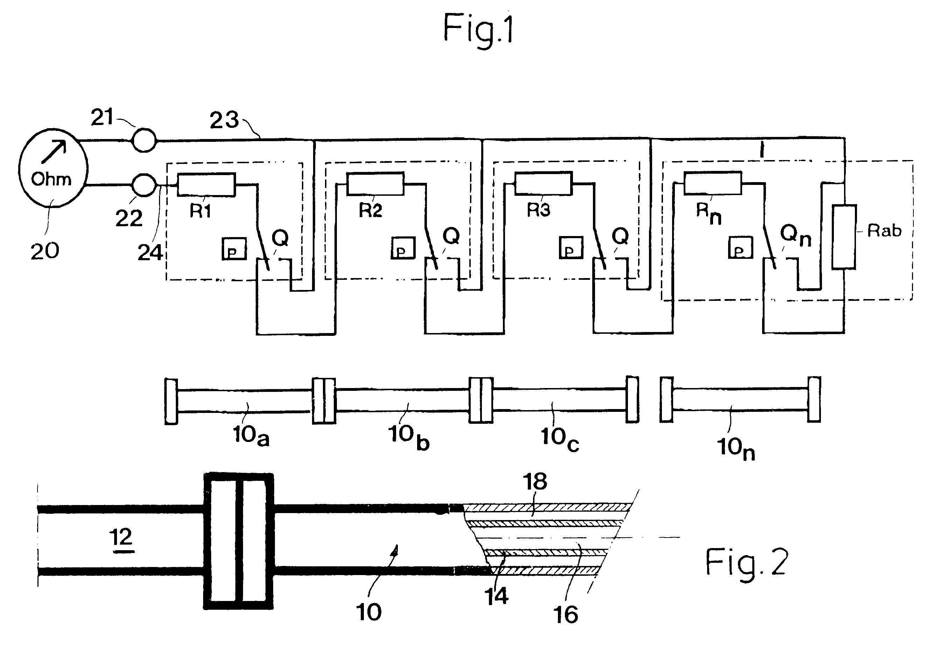

Mehrere Förderrohre $10_a$, $10_b$, $10_c$ bis $10_n$ sind innerhalb eines pneumatischen Fördersystems zu einem Förderstrang axial aneinandergefügt. Jedes der Förderrohre $10_a$ bis $10_n$ weist -- wie das beispielhafte Förderrohr 10 in Fig. 2 --einen Doppelmantel aus einem Außenrohr 12 und einem dazu konzentrischen Innenrohr 14 auf, dessen Innenraum 16 als Förderraum für ein aus Gründen der Übersichtlichkeit in der Zeichnung nicht dargestelltes Fördergut dient.

Tritt Fördergut an durch Verschleiß hervorgerufenen Schadstellen des Innenrohres 14 aus diesem radial aus, entsteht in einem zwischen Innenrohr 14 und Außenrohr 12 vorhandenen ringförmigen Zwischenraum 18 ein Überdruck. Dieser wird mittels eines Druckschalters Q mit Wechselkontakt überwacht. Ein solcher Druckschalter Q ist jedem der Förderrohre $10_a$ bis $10_n$ zugeordnet und jedem der Druckschalter Q ein Widerstand $R_1$ bis $R_x$ von beispielsweise 1 kΩ vorgeschaltet.

Der letzte -- in Fig. 1 rechtsliegende -- Druckschalter $Q_n$ erhält zusätzlich einen Abschlußwiderstand $R_{ab}$ von beispielsweise 220 kΩ , wobei

$$R_{Abschluß} > R_{Max.Mess.}$$

Im Normalzustand des pneumatischen Fördersystems liegen alle Widerstände $R_1$ bis $R_n$ einschließlich des Abschlußwiderstandes $R_{ab}$ in Reihe. Ein an Klemmen 21, 22 einer Zweidrahtleitung 23, 24 angeschlossenes digitales Ohmmeter 20 mißt einen Widerstandswert, der größer ist als sein Meßbereich. Beispielsweise ist letzterer bei einem Abschlußwiderstand von 220 kΩ hier 200 kΩ . Die Anzeige meldet zwar ein Überschreiten des Meßbereiches, zeigt aber keinen konkreten Wert an.

Wird hingegen bei einem Defekt in einem der Förderrohre $10_a$ -- bzw. $10_b$ bzw. $10_c$ bzw. $10_n$ -- der entsprechende Druckschalter Q betätigt, so schaltet sein Wechselkontakt den zugehörigen Widerstand $R_1$ -- oder $R_{2...}/R_n$ -- und gleichzeitig die Reihenschaltung der vor ihm liegenden Rohrleitungswiderstände -- $R_2$ bis $R_n$ -- auf die Rückleitung der zweiadrigen Drahtleitung 23, 24. Am Meßpunkt der Klemmen 21, 22 wird ein Widerstandswert angezeigt, welcher der entsprechenden Nummer des Förderrohres $10_a$ -- bzw. $10_b$ ... $10_n$ -- entspricht. So können beispielsweise bei einem 31/2-stelligen digitalen Ohmmeter 20 höchstens 199 Förderrohre überwacht werden.

Werden im Förderstrang mehrere Förderrohre $10_a$, $10_b$, $10_c$, $10_n$ gleichzeitig beschädigt, so wird nur die erste der Fehlerstellen in der Widerstandskette gemeldet, was allerdings zur Überwachung ausreicht; zum einen ist die gleichzeitige Beschädigung mehrerer Förderrohre 10 sehr unwahrscheinlich, zum anderen wird das darauffolgende defekte Förderrohr $10_b$ nach Austausch des ersten defekten Förderrohres $10_a$ sofort ermittelt.

**Patentansprüche**

1. Vorrichtung zum Überwachen von doppelwandigen Förderrohren eines Förderstranges in einem pneumatischen Fördersystem mittels wenigstens eines Detektorelementes, welches einen in einem zwischen der inneren und der äußeren Wandung des Förderrohres vorhandenen Zwischenraum entstehenden Überdruck aufnimmt und einer Auswerteinheit Signale zuführt,
dadurch gekennzeichnet,
daß dem Zwischenraum (18) eines jeden der zum Förderstrang zusammengesetzten Förderrohre ($10_a$ bis $10_n$) ein Druckschalter (Q) mit Wechselkontakt zugeordnet und jedem dieser Druckschalter ein Widerstand ($R_1$ bis $R_n$) vorgeschaltet ist, wobei die Widerstände mit einem Abschlußwiderstand ($R_{ab}$) in Reihe liegen sowie mit den Druckschaltern Teile einer gemeinsamen zweiadrigen Drahtleitung (23, 24) sind.

2. Vorrichtung nach Anspruch 1, dadurch gekennzeichnet, daß die Klemmen (21, 22) der zweiadrigen Drahtleitung (23, 24) als Meßpunkte an ein digitales Ohmmeter (20) angeschlossen sind.

3. Verfahren nach Anspruch 1 oder 2, dadurch gekennzeichnet, daß die zweiadrige Drahtleitung (23, 24) von Druckschalter (Q) zu Druckschalter geschleift ist.

4. Verfahren zum Überwachen von doppelwandigen Förderrohren eines Förderstranges in einem pneumatischen Fördersystem mittels wenigstens eines Detektorelementes, welches einen in einem zwischen der inneren und der äußeren Wandung des Förderrohres vorhandenen Zwischenraum entstehenden Überdruck aufnimmt und einer Auswerteinheit Signale zuführt, insbesondere unter Einsatz der Vorrichtung nach einem der Ansprüche 1 bis 3, dadurch gekennzeichnet, daß im Zwischenraum eines jeden Förderrohres der Druck durch einen Druckschalter mit Wechselkontakt aufgenommen und durch ein mit dem Druckschalter in einer gemeinsamen zweiadrigen Drahtleitung liegendes digitales Ohmmeter ein Widerstandswert gemessen wird, der im Normalzustand des Fördersystems größer als der Meßbereich des Ohmmeters ist, und daß bei Überdruck im Zwischenraum dessen Druckschalter betätigt sowie durch des Druckschalters Wechselkontakt ein vorgeschalteter Widerstand geschaltet wird.

5. Verfahren nach Anspruch 4, dadurch gekennzeichnet, daß während des Schaltens des Widerstandes die Reihenschaltung der vor ihm liegenden Rohrwiderstände auf die Rückleitung der zweiadrigen Drahtleitung geschaltet wird.

6. Verfahren nach Anspruch 4 oder 5, dadurch gekennzeichnet, daß durch den Überdruck an der Meßstelle ein Widerstandswert angezeigt wird, welcher der laufenden Nummer des den Überdruck aufweisenden Förderrohres entspricht.

Fig.1

Fig.2

4

Europäisches
Patentamt

**EUROPÄISCHER RECHERCHENBERICHT**

Nummer der Anmeldung
EP 95 10 0390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | WO-A-93 17275 (BRANDES) <br> * das ganze Dokument * <br> --- | 1,4 | B65G53/52 <br> G01M3/28 |
| A | EP-A-0 053 546 (TECHIGAZ) <br> * das ganze Dokument * <br> --- | 1,4 | |
| A | FR-A-2 215 577 (HANSEN NEUERBURG) <br> * das ganze Dokument * <br> --- | 1,4 | |
| A | DE-A-26 46 569 (KÜTTNER) <br> * das ganze Dokument * <br> ----- | 1,4 | |

| | |
|---|---|
| | **RECHERCHIERTE SACHGEBIETE (Int.Cl.6)** |
| | B65G <br> G01M <br> F17D |

Der vorliegende Recherchenbericht wurde für alle Patentansprüche erstellt

| Recherchenort | Abschlußdatum der Recherche | Prüfer |
|---|---|---|
| DEN HAAG | 16.Mai 1995 | Ostyn, T |